# EUROPÄISCHE PATENTSCHRIFT

(11) **EP 1 375 008 B1**
(45) Veröffentlichungstag und Bekanntmachung des Hinweises auf die Patenterteilung: **19.12.2007**
(21) Anmeldenummer: 03013117.1
(22) Anmeldetag: 11.06.2003
(51) Int. Cl.: B05B 7/04, B29B 7/40

(54) **Verfahren und Vorrichtung zum Verkleben von Automobilbauteilen**
Method and apparatus for gluing car components
Procédé et dispositif pour coller des pièces de véhicules

(30) Priorität: 21.06.2002 DE 10227910
(43) Veröffentlichungstag der Anmeldung: 02.01.2004
(73) Patentinhaber: EDF Polymer-Applikation Maschinenfabrik GmbH, 6912 Hörbranz (AT)
(72) Erfinder: Fetz, Dietmar, 6890 Lustenau (AT)
(74) Vertreter: Hennicke, Ernst Rüdiger

(56) Entgegenhaltungen:
- DE-A- 19 923 378
- US-A- 5 979 794

## Beschreibung

Die Erfindung betrifft ein Verfahren zum Verkleben von Automobilbauteilen, beispielsweise für die Bördelnahtverklebung im Karosserierohbau, unter Verwendung eines Mehrkomponentenklebstoffes, wobei die Klebstoffkomponenten mittels einer Mischeinrichtung miteinander vermischt und anschließend an gewünschter Stelle am Automobilbauteil angebracht werden. Die Erfindung ist darüber hinaus auf eine Klebstoffmisch- und Dosiervorrichtung für Mehrkomponentenklebstoffe zur Durchführung des erfindungsgemäßen Verfahrens gerichtet. Ein solches Verfahren wird z.B. in US 5979794 beschrieben.

In der Automobilindustrie werden die diversen Bauteile zunehmend häufig unter Einsatz von Klebstoffmassen gefügt, wobei in der Vergangenheit meist einkomponentige, hochviskose Klebemassen zum Einsatz kamen. Die Klebemassen werden meistens mit Hilfe von Dosiergeräten und Auftragspistolen an gewünschter Stelle am Automobilbauteil aufgetragen, wobei hier häufig Kolbendosierer zum Einsatz kommen, aus denen die hochviskosen Massen hydraulisch, pneumatisch oder elektrisch ejiziert werden.

Die im Automobilbau eingesetzten Einkomponentenklebstoffe haben den Nachteil, daß ihre Aushärtegeschwindigkeit im allgemeinen nur gering ist, ein Problem, das auch durch eine thermische Nachbehandlung zur Reaktionsbeschleunigung nicht zufriedenstellend gelöst werden kann. Es kommt daher häufig vor, daß Klebenähte noch nicht ausreichend ausgehärtet sind, bevor das geklebte Bauteil einer weiteren Bearbeitung unterzogen wird, wodurch die Klebnaht in Mitleidenschaft gezogen werden kann. So passiert es beispielsweise regelmäßig, daß Klebemassen bei der üblich gewordenen Bördelnahtverklebung im Karosseriebau wieder teilweise ausgewaschen werden, wenn die Karosserie mit den darin gelegten Klebenähten einer nachfolgenden Kalttauchlackierung unterzogen wird. Dies führt nicht nur dazu, daß die Klebenaht anschließend möglicherweise nicht mehr richtig dicht bzw. fest wird, sondern hat auch zur Folge, daß der im Tauchbad ausgewaschene Klebstoff das Lackierbad verschmutzt und die Filtersysteme der Umwälzpumpen des Lackierbades in kürzester Zeit zusetzt. Hierdurch entstehen sehr hohe Nebenkosten in der Fabrikation und Produktion.

Um diesen Nachteil zu vermeiden, ist vorgeschlagen worden, anstelle von einkomponentigen Klebstoffen Mehrkomponentenklebstoffe einzusetzen, deren Klebstoffkomponenten kurz vor ihrem Auftrag auf dem Automobilteil miteinander vermischt, werden und die dann in wesentlich kürzerer Zeit aushärten. Hierzu ist es allerdings erforderlich, die Klebstoffkomponenten genau in einem vorgeschriebenen (stöchiometrischen) Verhältnis zueinander homogen,zu vermischen, bevor der Klebstoff dann schnell nach der Vermischung seiner Komponenten aufgetragen wird. Hierfür hat man statische Mischrohre eingesetzt, denen die hochviskosen oder pastösen Klebstoffkomponenten mit hohem Druck zugeführt werden und in denen sie sich auf ihrem Weg durch das Mischrohr miteinander vermengen.

Da der Klebstoffauftrag auf die Automobilbauteile immer wieder unterbrochen wird, kommt es bei Einsatz solcher statischen Mischrohre dazu, daß der Klebstoff im Mischrohr während der Auftragsunterbrechungen schon auszuhärten beginnt und die Austragsdüse der Mischeinrichtung schon nach verhältnismäßig kurzer Zeit verstopfen kann. Um diesem Problem zu begegnen, hat man vorgeschlagen, preiswerte Mischrohre aus Kunststoff zu verwenden, die als Einwegteile solange eingesetzt werden, bis sie sich zugesetzt haben. Es hat sich aber gezeigt, daß solche statischen Kunststoffmischrohre sich nicht für die Verarbeitung der in der Automobilindustrie üblichen Klebstoffe eignen, da diese eine zu hohe Viskosität haben und bei zu hohen Drükken verarbeitet werden und die Kunststoffmischrohre binnen kürzester Zeit zerstört werden.

Mischrohre aus Metall können den hohen Drücken und Viskositäten bei der Verarbeitung von Klebstoffen in der Automobilindustrie zwar standhalten, haben aber ebenfalls den Nachteil, sich schnell mit aushärtendem Kleber zuzusetzen. Ihre hohen Anschaffungskosten verbieten es, Metall-Mischrohre als Einmalwerkzeuge zu verwenden, die entsorgt werden, wenn sie von dem Klebstoff zugesetzt sind. Andererseits ist die Reinigung solcher Metall-Mischrohre so aufwendig, daß die Kosten für die Verarbeitung von Mehrkomponentenklebstoffen auch mit solchen an sich langlebigeren Metall-Mischrohren nicht zu vertreten sind.

Erschwerend kommt bei Einsatz der statischen Mischrohre hinzu, daß sie sich während ihres Einsatzes fortwährend allmählich zusetzen und dadurch die Qualität des hieraus ejizierten Klebstoffes variiert. Es läßt sich auch nur sehr schwer bestimmen, wann es erforderlich ist, ein schon eine Zeitlang im Einsatz befindliches Mischrohr gegen ein Neues auszutauschen, um die geforderten Qualitätsanforderungen zu erfüllen.

Aufgabe der Erfindung ist es, ein Verfahren der eingangs genannten Art anzugeben, mit dem auch Mehrkomponentenklebstoffe im Automobilbau ökonomisch und mit gleichbleibend hoher Qualität verarbeitet werden können.

Diese Aufgabe wird mit der Erfindung dadurch gelöst, daß als Mischeinrichtung ein mit einem rotierend antreibbaren Mischorgan versehener, dynamischer Mischkopf mit Hochdruck-Einspritzventilen für die Klebstoffkomponenten sowie mit Reinigungsanschlüssen für eine Hochdruck-Flüssigkeitsspülung verwendet wird.

Die erfindungsgemäße Verwendung des dynamischen Mischkopfes zum Vermischen der sehr hochviskosen oder pastösen Klebstoffkomponenten, wie sie im Automobilbau üblich sind, erlaubt deren zuverlässige Vermischung mit gleichbleibender Produktqualität, wobei Beschädigungen der Mischeinrichtung infolge der hohen Arbeitsdrücke nicht zu befürchten sind. Die Hochdruck-Flüssigkeitsspülung ermöglicht es, den Mischkopf bei jeder Arbeitsunterbrechung zu reinigen, so daß nicht befürchtet werden muß, daß sich dieser durch aushärtenden Klebstoff zusetzt. Die Klebstoffkomponenten werden durch die Hochdruck-Einspritzventile in eine das Mischorgan aufnehmende Mischkammer im Mischkopf vorzugsweise in stöchiometrischem Verhältnis eingebracht und dann durch Rotation des Mischorgans miteinander vermischt und über eine Auslaßdüse ausgetragen. Anschließend wird die Zufuhr von Klebstoffkomponenten über die Einspritzventile gestoppt und es wird Hochdruck-Flüssigkeit - vorzugsweise Wasser - in den Mischkopf gespritzt, mit der im Mischkopf nach Beendigung des Klebevorgangs zurückbleibende Klebstoffkomponenten aus dem Mischkopf vorzugsweise ebenfalls über die Austragsdüse entfernt werden.

Vorzugsweise wird zweckmäßig so gearbeitet, daß die Klebstoffkomponenten dem Mischkopf unmittelbar vor Beginn und während des Klebevorgangs kontinuierlich über die Hochdruck-Einspritzventile zugeführt werden und der daraus mittels des rotierenden Mischorgans gemischte Klebstoff kontinuierlich aus der Auslaßdüse ejiziert und von dieser unmittelbar oder mittelbar an gewünschter Stelle auf dem zu klebenden Bauteil aufgetragen wird. Die Klebstoffkomponenten werden also bei dieser bevorzugten Verfahrensweise nicht chargenweise miteinander vermischt und danach ejiziert, sondern die Vermischung erfolgt kontinuierlich auf dem Weg der Klebstoffkomponenten von ihrem Einlaß bis zum Auslaß.

Der Mischkopf kann unmittelbar nach einer vorbestimmten Anzahl von Misch- bzw. Klebevorgängen mittels über die Reinigungsabschlüsse zugeführter Hochdruckflüssigkeit gereinigt werden, wobei es besonders bevorzugt wird, wenn der Reinigungsvorgang nach jedem Misch- bzw. Klebevorgang erfolgt. Als Hochdruck-Reinigungsflüssigkeit wird bevorzugt Wasser eingesetzt, es ist aber auch möglich, den Mischkopf mit einer de beiden Klebstoffkomponenten selbst rückzuspülen, d.h. solange nur eine der beiden Komponenten in das Mischsystem zu injizieren, bis hierdurch die im Mischkopf noch verbliebene, reaktive andere Komponente durch die Auslaßdüse vollständig hinausgedrückt ist. da sich dann nur noch eine Komponente im Mischkopf befindet, die allein nicht aushärten kann, ist eine weitere Reinigung mittels eine zusätzlichen Reinigungsflüssigkeit nicht unbedingt erforderlich.

Eine besonders gute Vermischung wie auch eine vorzügliche Abreinigung des Mischkopfes erreicht man, wenn die Klebstoffkomponenten und/oder die Hochdruckflüssigkeit etwa radial gegen das Mischorgan in den Mischkopf injiziert werden und der fertig gemischte Klebstoff aus diesem etwa in Axialrichtung des Mischorgans ausgestoßen wird.

In vorteilhafter Weiterbildung des erfindungsgemäßen Verfahrens wird mindestens eine der hochviskosen Klebstoffkomponenten aus einem Lagerbehälter mittels einer Schöpfkolbenpumpe entnommen und über eine Zufuhrleitung einer Dosierpumpe zugeführt, und die Dosierpumpe fördert die mindestens eine Klebstoffkomponente über eine Dosierleitung mit konstantem Volumenstrom zum zugehörigen Hochdruck-Einspritzventil am Mischkopf. Es hat sich gezeigt, daß durch die Trennung der Entnahmeförderung der Klebstoffkomponenten aus ihren Lagerbehältern und der Dosierförderung hin zu den Hochdruck-Einspritzventilen mittels zweier verschiedener Pumpen, nämlich der Schöpfkolbenpumpe und der Dosierpumpe, die an sich sehr schwer mit konstantem Volumenstrom förderbaren Klebstoffkomponenten den Einspritzventilen tatsächlich mit höchster Mengen- bzw. Volumengenauigkeit zugeführt werden können. Die Dosierpumpe egalisiert den von der Schöpfkolbenpumpe zunächst etwas ungleichförmig ankommenden Volumenstrom der jeweiligen Klebstoffkomponente, sorgt also während des Misch- und Dosiervorgangs für den erwünschten konstanten Durchsatz.

Mit dieser Anordnung können die Klebstoffkomponenten mit beliebigen Mischungsverhältnissen vermischt werden, beispielsweise kann das Mischungsverhältnis im Bereich von 100:1 bis 1:100 variieren. Vorzugsweise werden beide Klebstoffkomponenten vom Beginn ihrer Einspritzung in den Mischkopf mittels der Hochdruck-Einspritzventile bis zum Ende der Dosierung mit konstantem Volumenstrom zugefördert.

Es kann je nach Art der zu verarbeitenden Klebstoffkomponenten weiter vorteilhaft sein, wenn die Schöpfkolbenpumpe, die Zufuhrleitung, die Dosierpumpe und/oder die Dosierleitung beheizbar ist/sind. Es ist hierdurch möglich, die Viskosität der verarbeiteten Werkstoffe auf ihrem Förderweg zu beeinflussen und ihr Fließverhalten während des Fördervorgangs zu verbessern, was insbesondere bei pastösen Klebstoffkomponenten von Bedeutung sein kann.

Zweckmäßig ist es auch, wenn die Drehzahl des Mischorgans regelbar ist. Über die Drehzahlregelung läßt sich die Mischleistung des Mischkopfes einfach einstellen.

In bevorzugter Weiterbildung der Erfindung ist der Mischkopf mittels eines Roboters, vorzugsweise eines Gelenkarmroboters beweglich, der gemischte Mehrkomponentenklebstoff kann dann unmittelbar aus dem Mischkopf an der gewünschten Stelle auf dem Automobilteil aufgetragen werden, indem der Mischkopf von dem Roboter im zu verklebenden Bereich über das Autoteil bewegt wird.

Mit der Erfindung wird eine Klebstoffmisch- und Dosiervorrichtung für Mehrkomponentenklebstoffe zur Verwendung in der Automobilindustrie geschaffen, beispielsweise zum Herstellen einer Bördelnahtverklebung im Karosserierohbau, die gekennzeichnet ist durch einen dynamischen Mischkopf mit rotierend antreibbarem Mischorgan und mit Hochdruck-Einspritzventilen für die Klebstoffkomponenten sowie mit Reinigungsanschlüssen für eine Hochdruck-Flüssigkeitsspülung, durch je eine Schöpfkolbenpumpe für jede Klebstoffkomponente, die die entsprechende Komponente aus ihrem Lagerbehälter entnimmt und durch je eine Dosierpumpe für jede Klebstoffkomponente, die die jeweilige ihr von der Schöpfkolbenpumpe über eine Zufuhrleitung zugeführte Klebstoffkomponente während des Misch- und Dosiervorgangs mit konstantem Volumenstrom über eine Dosierleitung zum zugehörigen Hochdruck-Einspritzventil fördert, und vorzugsweise durch eine Robotereinrichtung zum Bewegen mindestens des Mischkopfes relativ zu einem mit einer Mehrkomponenten-Klebstoffraupe zu versehenden Bauteil. Die erfindungsgemäße Vorrichtung ist dabei vorzugsweise mit einer Hochdruck-Wasserpumpe versehen, die über eine Hochdruck-Spülleitung an den Reinigungsanschlüssen angeschlossen ist. Von der Hochdruckwasserpumpe zugefördertes Reinigungswasser wird in den Mischkopf zu dessen Reinigung nach Beendigung eines Misch- und Dosiervorgangs unter hohem Druck injiziert, der im Bereich von 100 bis 180 bar liegen kann. Hierdurch werden das in dem Mischkopf verbliebene Klebstoffgemisch bzw. die noch unvermischten Klebstoffkomponenten aus dem Mischkopf durch dessen Auslaßdüse verdrängt. Sobald das Wasser den Mischkopf frei durchströmen kann, wird der hohe Einspritzdruck des Reinigungswassers am Reinigungsanschlußventil in kinetische Energie der Reinigungsflüssigkeit umgesetzt, d.h. das Wasser trifft mit sehr hoher Geschwindigkeit von mehr als 80 m/s auf den noch mit Klebstoffresten behafteten Bereichen der Mischkammer auf und löst diese Klebstoffreste zuverlässig ab.

Weitere Merkmale und Vorteile der Erfindung ergeben sich aus der nachfolgenden Beschreibung und der Zeichnung, worin eine bevorzugte Ausführungsform der Erfindung an einem Beispiel näher erläutert wird. Es zeigt:
- Fig. 1: einen für die Durchführung des erfindungsgemäßen Verfahrens zum Einsatz kommenden Mischkopf im Schnitt; und
- Fig. 2: ein Fließschema einer erfindungsgemäßen Einrichtung zur Durchführung des erfindungsgemäßen Verfahrens.

Der in der Zeichnung in seiner Gesamtheit mit 10 bezeichnete Mischkopf dient zur Vermischung von zwei oder mehr Klebstoffkomponenten zu einem Mehrkomponentenklebstoff, der beim Verkleben von Automobilbauteilen beispielsweise bei der Bördelnahtverklebung im Karosseriebau zum Einsatz kommt. Der Mischkopf weist ein über eine Antriebswelle 11 von einem (nicht dargestellten) Motor rotierend antreibbares Mischorgan 12 auf, das unter Bildung eines schmalen Spalts in einer Mischkammer 13 drehbar angeordnet ist. In die Mischkammer 13 münden zwei radial auf das Mischorgan ausgerichtete Einspritzventile 14, über deren Anschlußstutzen 15 die Klebstoffkomponenten A, B zugeführt werden. Die Einspritzventile 14 haben in die Mischkammer 13 mündende Einspritzdüsen 16, die von schaltbaren Düsennadeln 17 verschließbar sind.

Zwischen den beiden einander gegenüber angeordneten Einspritzventilen sind am Mischkopf zwei oder mehr Reinigungsanschlüsse angeordnet, die in ihrem Aufbau dem der Einspritzventile entsprechen und die in der Schnittdarstellung nicht sichtbar sind. Die Anschlußstutzen der Reinigungsanschlüsse sind an eine Hochdruck-Wasserversorgung angeschlossen.

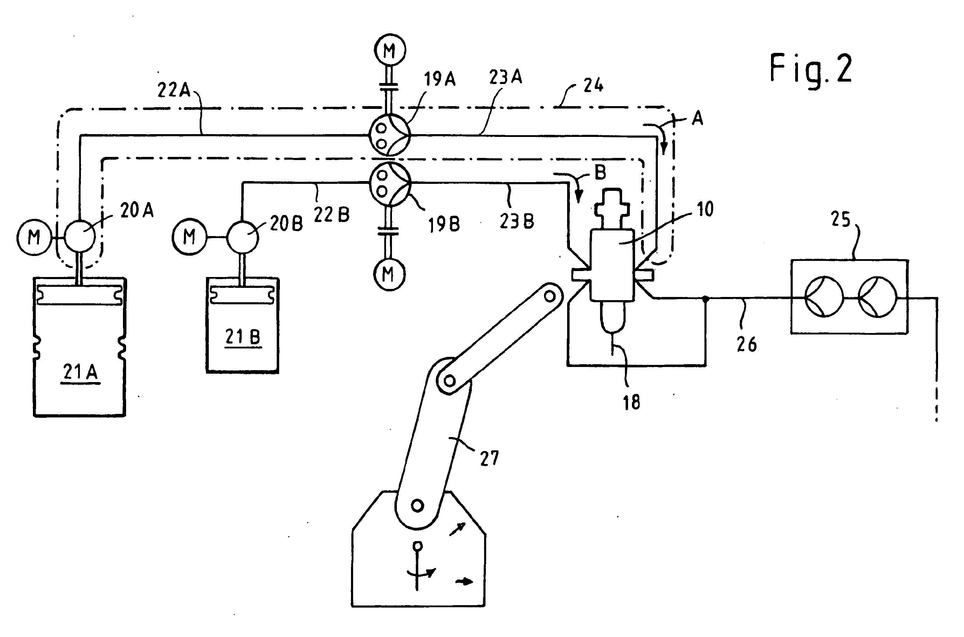

Wenn Klebstoff nach dem erfindungsgemäßen Verfahren auf ein Automobilbauteil aufzutragen ist, werden die unter Druck an den Anschlußstutzen 15 anstehenden Klebstoffkomponenten A, B durch Öffnen der Einspritzventile 14 im gewünschten, stöchiometrischen Verhältnis zueinander in die Mischkammer 13 injiziert, wo sie von dem dann rotierenden Mischorgan auf ihrem Weg zum Mischkopfauslaß 18 sorgfältig zu dem fertigen Klebstoff C vermischt werden. Der Klebstoff kann dann unmittelbar vom Mischkopf an gewünschter Stelle auf dem zu klebenden Bauteil aufgetragen werden, wozu der Mischkopf bei dem bevorzugten Ausführungsbeispiel an einer Roboter-Handhabungseinrichtung (Fig.2) angeordnet ist, mit der er entlang der gewünschten Kontur über das Bauteil geführt wird. Dabei werden die Klebstoffkomponenten dem Mischkopf kontinuierlich während des Klebevorgangs über die Einspritzventile zugeführt und der fertig gemischte Klebstoff wird ebenso kontinuierlich über die Auslaßdüse 18 ejiziert. Sobald die gewünschte Klebstoffraupe auf dem Bauteil fertig gelegt ist, werden die Einspritzventile durch Verschieben der Düsennadeln gegen die Einspritzdüsen geschlossen, so daß die Klebstoffkomponenten nicht weiter in die Mischkammer fließen können. Darin verbliebene Reste des Klebstoffes bzw. dessen Komponenten werden nach Verschluß der Einspritzventile durch Öffnen der (nicht dargestellten) Reinigungsanschlüsse aus der Mischkammer herausgespült, indem über die Reinigungsanschlüsse Wasser mit hohem Druck von 120 bis 160 bar in die Mischkammer gelangt und dort die Reste von Klebstoff bzw. Klebstoffkomponenten von den Kammerwänden bzw. dem Mischorgan ablöst und über den Mischkopfauslaß führt. Auch während dieses Reinigungsvorganges rotiert das Mischorgan, so daß sichergestellt ist, daß es allseitig abgereinigt wird.

Das erfindungsgemäße Verfahren gewährleistet, daß die Klebstoffkomponenten zu jeder Zeit im gewünschten, stöchiometrischen Verhältnis miteinander vermischt werden können, da keine Klebstoffreste in der Mischeinrichtung das Mischergebnis beeinflussen. Die regelmäßige Reinigung der Mischeinrichtung gewährleistet, daß diese über einen langen Zeitraum zuverlässig arbeitet und nur eines geringen Wartungsaufwands bedarf.

Fig.2 zeigt in einem stark vereinfachten Fließschema den prinzipiellen Aufbau der zur Durchführung des erfindungsgemäßen Verfahrens eingesetzten Einrichtung. Sie besteht im wesentlichen aus dem Mischkopf 10, zwei Dosierpumpen 19A und 19B und zwei Schöpfkolbenpumpen 20A, 20B, die die beiden Klebstoffkomponenten A, B unmittelbar aus Lagerbehältern 21A, 21B entnehmen und über Zufuhrleitungen 22A, 22B den Dosierpumpen 19 zuleiten. Die Dosierpumpen 19 sind Hochdruckpumpen, die die Klebstoffkomponenten A,B dann mit konstantem Volumenstrom durch Dosierleitungen 23 A, 23B zu den Hochdruck-Einspritzventilen im Mischkopf 10 fördern, in dessen Mischkammer sie von dem rotierenden Mischorgan 12 vermischt werden. Es versteht sich, daß neben den vereinfacht dargestellten und erwähnten Aggregaten die Vorrichtung bzw. deren Bestandteile auch noch über die üblichen Absperr- und Rezirkulationsventile, Meßwertaufnehmer und -anzeiger, Bypaßleitungen usw. verfügen. Um das Fließverhalten der im gezeigten Ausführungsbeispiel als pastös bei Umgebungstemperatur angenommenen Klebstoffkomponente A zu verbessern, sind die im Fließweg dieser Klebstoffkomponente befindlichen Aggregate mit einer elektrisch betriebenen, regelbaren Heizung 24 versehen, wie dies durch die Strichpunktierung angedeutet ist.

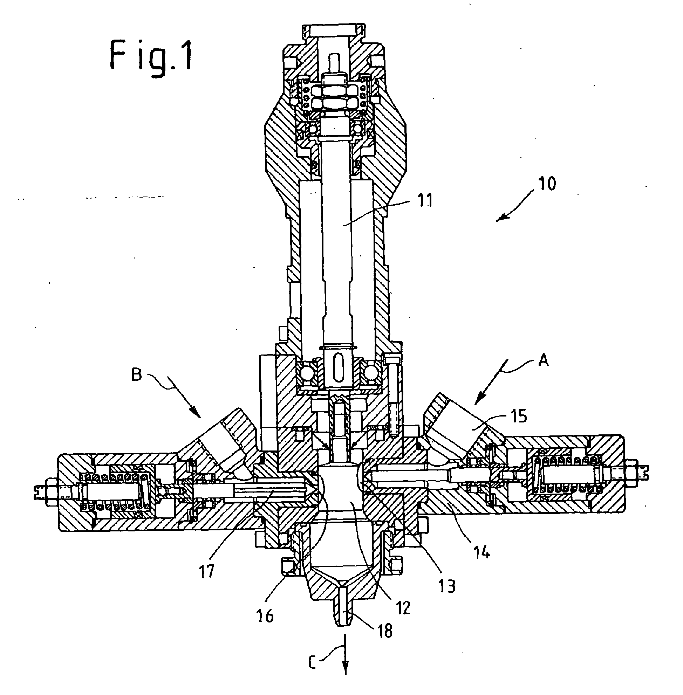

Für die Reinigung des Mischkopfes mit Hochdruckwasser weist die Vorrichtung eine Hochdruckwasserpumpe 25 auf, die über eine Hochdruck-Wasserleitung 26 an den in Fig. 1 nicht näher dargestellten Reinigüngsanschlüssen des Mischkopfes angeschlossen ist. Um den Mischkopf relativ zu dem (nicht dargestellten) Werkstück wie bspw. einer Autotüre bewegen zu können, ist er an einem Auslegerarm eines Handhabungsroboters befestigt, der in Fig. 2 schematisch angedeutet und mit 27 bezeichnet ist

Die Erfindung ist nicht auf das beschriebene Ausführungsbeispiel beschränkt, sondern es sind Änderungen oder Ergänzungen denkbar, ohne den Rahmen der Erfindung zu verlassen. Beispielsweise ist es möglich, den Mischkopf nicht nach jedem Klebevorgang mit Reinigungsflüssigkeit nachzuspülen, insbesondere dann, wenn Klebstoffe verarbeitet werden, die eine vergleichsweise lange Topfzeit haben und somit länger verarbeitbar bleiben. In solchen Fällen kann es ausreichen, den Verfahrensschritt der Abreinigung der Mischeinrichtung erst nach mehreren Misch- bzw. Klebevorgängen auszuführen, beispielsweise nach drei, fünf oder zehn Mischvorgängen.

## Patentansprüche

1. Verfahren zum Verkleben von Automobilbauteilen, beispielweise für die Bördelnahtverklebung im Karosserierohbau, unter Verwendung eines Mehrkomponentenklebstoffs, wobei die Klebstoffkomponenten mittels einer Mischeinrichtung miteinander vermischt und anschließend an gewünschter Stelle am Automobilbauteil angebracht werden, **dadurch gekennzeichnet, daß** als Mischeinrichtung ein mit einem rotierend antreibbaren Mischorgan (12) versehener, dynamischer Mischkopf (10) mit Hochdruck-Einspritzventilen (14) für die Klebstoffkomponenten (A, B) sowie mit Reinigungsanschlüssen für eine Hochdruck-Flüssigkeitsspülung verwendet wird.

2. Verfahren nach Anspruch 1, **dadurch gekennzeichnet, daß** die Klebstoffkomponenten (A, B) im Mischkopf (10) in stöchiometrischem Verhältnis vermischt werden.

3. Verfahren nach Anspruch 1 oder 2, **dadurch gekennzeichnet, daß** die Klebstoffkomponenten (A, B) dem Mischkopf (10) unmittelbar vor Beginn und während des Klebevorgangs kontinuierlich über die Hochdruck-Einspritzventile (14) zugeführt werden und der daraus mittels des rotierenden Mischorgans (12) gemischte Klebstoff (C) kontinuierlich über eine Auslaßdüse (18) ejiziert und von dieser unmittelbar oder mittelbar an gewünschter Stelle auf dem zu klebenden Bauteil aufgetragen wird.

4. Verfahren nach einem der Ansprüche 1 bis 3, **dadurch gekennzeichnet, daß** der Mischkopf (10) unmittelbar nach einer vorbestimmten Anzahl von Misch- bzw. Klebevorgängen mittels über die Reinigungsanschlüsse zugeführter Hochdruckflüssigkeit gereinigt wird.

5. Verfahren nach Anspruch 4, **dadurch gekennzeichnet, daß** der Mischkopf (10) nach jedem Misch- bzw. Klebevorgang gereinigt wird.

6. Verfahren nach Anspruch 4 oder 5, **dadurch gekennzeichnet, daß** als Hochdruckflüssigkeit Wasser eingesetzt wird.

7. Verfahren nach einem der Ansprüche 1 bis 6, **dadurch gekennzeichnet, daß** die Klebstoffkomponenten (A, B) und/oder die Hochdruckflüssigkeit etwa radial gegen das Mischorgan (12) in den Mischkopf (10) injiziert werden und der fertig gemischte Klebstoff (C) aus diesem etwa in Axialrichtung des Mischorgans (12) ausgestoßen wird.

8. Verfahren nach einem der Ansprüche 1 bis 7, **dadurch gekennzeichnet, daß** mindestens eine der hochviskosen Klebstoffkomponenten (A, B) aus einem Lagerbehälter (21) mittels einer Schöpfkolbenpumpe (20) entnommen und über eine Zufuhrleitung (22) einer Dosierpumpe (19) zugeführt wird, und.daß die Dosierpumpe (19) die mindestens eine Klebstoffkomponente (A bzw. B) über eine Dosierleitung (23) mit konstantem Volumenstrom zum zugehörigen Hochdruck-Einspritzventil (14) am Mischkopf (10) fördert.

9. Verfahren nach einem der Ansprüche 1 bis 8, **dadurch gekennzeichnet, daß** die Klebstoffkomponenten (A, B) mit Mischungsverhältnissen von 200:1 bis 1:200 vermischt werden und daß beide Klebstoffkomponenten (A,B) vom Beginn ihrer Einspritzung in den Mischkopf mittels der Hochdruck-Einspritzventile (14) bis zum Ende der Dosierung mit konstantem Volumenstrom zugefördert werden.

10. Verfahren nach Anspruch 8 oder 9, **dadurch gekennzeichnet, daß** die Schöpfkolbenpumpe (20), die Zufuhrleitung (22), die Dosierpumpe (19) und/oder die Dosierleitung (23) beheizbar ist/sind.

11. Verfahren nach einem der Ansprüche 1 bis 9, **dadurch gekennzeichnet, daß** die Drehzahl des Mischorgans. (12) regelbar ist.

12. Verfahren nach einem der Ansprüche 1 bis 11, **dadurch gekennzeichnet, daß** der Mischkopf (10) mittels eines Roboters (27), vorzugsweise eines Gelenkarmroboters beweglich ist.

13. Klebstoffmisch- und Dosiervorrichtung für Mehrkomponentenklebstoffe zur Verwendung in der Automobilindustrie, beispielsweise zum Herstellen einer Bördelnahtverklebung im Karosserierohbau, mit einem dynamischen Mischkopf (10) mit rotierend antreibbarem Mischorgan (12) und mit Hochdruck-Einspritzventilen (14) für die Klebstoffkomponenten (A,B) sowie mit Reinigungsanschlüssen für eine Hochdruck-Flüssigkeitsspülung, mit je einer Schöpfkolbenpumpe. (20A, 20B) für jede Klebstoffkomponente (A bzw. B), die die entsprechende Komponente aus ihrem Lagerbehälter (21A, 21B) entnimmt und mit je einer Dosierpumpe (19A, 19B) für jede Klebstoffkomponente (A,B), die die jeweilige ihr von der Schöpfkolbenpumpe (20A,20B) über eine Zufuhrleitung (22A, 22B) zugeführte Klebstoffkomponente (A bzw. B) währen des Misch- und Dosiervorgangs mit konstantem Volumenstrom über eine Dosierleitung (23A, 23B) zum zugehörigen Hochdruck-Einspritzventil (14) fördert, und mit einer Robotereinrichtung (27) zum Bewegen mindestens des Mischkopfes (10) relativ zu einem mit einer Mehrkomponenten-Klebstoffraupe zu versehenden Bauteil.

14. Vorrichtung nach Anspruch 13, **gekennzeichnet durch** eine Hochdruck-Wasserpumpe (25), die über eine Hochdruck-Spülleitung (26) an den Reinigungsanschlüssen angeschlossen ist.

## Claims

1. Method for adhering vehicle components, for example for the flanged seam adhesion in automotive welding and assembly lines, with the use of a multi-component adhesive, whereby the adhesive components are mixed with one another by means of a mixing device and are then applied to the automotive component at the desired location, **characterised in that** a dynamic mixing head (10) provided with a mixing member (12) which can be driven in a rotary manner with high pressure injection valves (14) is used as the mixing device for the adhesive components (A, B) and with cleansing connections for a high pressure fluid cleansing.

2. Method according to claim 1, **characterised in that** the adhesive components (A, B) are mixed in the mixing head (10) in a stoichiometric ratio.

3. Method according to claim 1 or 2, **characterised in that** the adhesive components (A, B) are fed to the mixing head (10) continually immediately prior to the start and during the adhesive process by means of the high pressure injection valves (14) and the mixed adhesive (C) mixed therefrom by means of the rotating mixing member (12) is ejected continually by means of a discharge nozzle (18) and is applied by this directly or indirectly to the component to be adhered at the desired location.

4. Method according to one of claims 1 to 3, **characterised in that** the mixing head (10) is cleaned immediately after a predetermined number of mixing or adhesive processes by means of high pressure fluid fed via the cleansing connections.

5. Method according to claim 4, **characterised in that** the mixing head (10) is cleaned after every mixing or adhesive process.

6. Method according to claim 4 or 5, **characterised in that** water is used as high pressure fluid.

7. Method according to one of claims 1 to 6, **characterised in that** the adhesive components (A, B) and/or the high pressure fluid are injected into the mixing head (10) approximately radially against the mixing member (12) and that the completed mixed adhesive (C) is ejected from this approximately in the axial direction of the mixing member (12).

8. Method according to one of claims 1 to 7, **characterised in that** at least one of the highly viscous adhesive components (A, B) is withdrawn from a storage vessel (21) by means of a scoop piston pump (20) and is fed to a dosing pump (19) via a feed line (22), and that the dosing pump (19) feeds the at least one adhesive component (A or B) to the associated high pressure injection valve (14) at the mixing head (10) via a dosing line (23) with a constant volume flow.

9. Method according to one of claims 1 to 8, **characterised in that** the adhesive components (A, B) are mixed with mixing ratios of 200:1 to 1:200 and that both adhesive components (A, B) are fed into the mixing head with a constant volume flow from the start of their injection to the end of the dosing by means of the high pressure injection valves (14).

10. Method according to claim 8 or 9, **characterised in that** the scoop piston pump (20), the feed line (22), the dosing pump (19) and/or the dosing line (23) can be heated.

11. Method according to one of claims 1 to 9, **characterised in that** the speed of the mixing member (12) can be controlled.

12. Method according to one of claims 1 to 11, **characterised in that** the mixing head (10) can be moved by means of a robot (27), preferably a robot with jointed arms.

13. Adhesive mixture and dosing device for multi-component adhesives for use in the automotive industry, for example for the production of a flanged adhesion in automotive welding and assembly lines, with a dynamic mixing head (10) with mixing member (12) which can be driven in a rotary manner and with high pressure injection valves (14) for the adhesive components (A, B) and with cleansing connections for a high pressure fluid cleansing, with a respective scoop piston pump (20A, 20B) for each adhesive component (A or B), which withdraws the respective component from its storage vessel (21A, 21B) and with a respective dosing pump (19A, 19B) for each adhesive component (A, B), which feeds the respective adhesive component (A or B) which is fed to it from the scoop piston pump (20A, 20B) via a feed line (22A, 22B) during the mixing and dosing process with a constant volume flow via a dosing line (23A, 23B) to the associated high pressure injection valve (14), and with a robot device (27) for moving at least the mixing head (10) relative to the component which is to be provided with a multi-component adhesive seam.

14. Apparatus according to claim 13, **characterised by** a high pressure water pump (25) which is connected to the cleansing connections via a high pressure flushing line (26).

## Revendications

1. - Procédé pour coller des pièces de véhicules automobiles, par exemple pour le collage des joints de bords relevés dans la construction des carrosseries brutes, par l'utilisation d'une colle à plusieurs composants, dans lequel les composants de la colle sont mélangés les uns avec les autres au moyen d'un dispositif de mélange et ensuite sont appliqués à des endroits désirés de la pièce du véhicule automobile, **caractérisé en ce qu'**on utilise en tant que dispositif de mélange, un dispositif comprenant une tête de mélange (10) dynamique pourvue d'un organe de mélange (12) pouvant être entraîné en rotation, avec des soupapes d'injection haute pression (14) pour les composants (A, B) de la colle ainsi que des raccords pour le nettoyage par rinçage d'un liquide sous haute pression.

2. - Procédé selon la revendication 1, **caractérisé en ce que** les composants (A, B) de la colle sont mélangés dans la tête de mélange (10) dans un rapport stoechiométrique.

3. - Procédé selon la revendication 1 ou 2, **caractérisé en ce que** les composants (A, B) de la colle sont amenés en continu dans la tête de mélange (10) juste avant et pendant l'opération de collage, par les soupapes d'injection haute pression (14) et la colle mélangée (C) obtenue au moyen de l'organe de mélange est éjectée en continu d'une buse de sortie (18) et à partir de celle-ci est appliquée immédiatement ou indirectement en des endroits désirés de la pièce à coller.

4. - Procédé selon l'une des revendications 1 à 3, **caractérisé en ce que** la tête de mélange (10) est, après un nombre prédéterminé d'opérations de mélange ou de collage, nettoyée au moyen d'un liquide, sous haute pression qui est conduit à travers les raccords de nettoyage.

5. - Procédé selon la revendication 4, **caractérisé en ce que** la tête de mélange (10) est nettoyée après chaque opération de mélange ou de collage.

6. - Procédé selon l'une des revendications 4 ou 5, **caractérisé en ce que** l'eau est utilisée en tant que liquide sous haute pression.

7. - Procédé selon l'une des revendications 1 à 6, **caractérisé en ce que** les composants (A, B) de la colle et/ou le liquide sous haute pression sont injectés dans la tête de mélange (10) sensiblement radialement contre l'organe de mélange (12) et la colle finie (C) est expulsée de cette tête de mélange (10) sensiblement dans la direction axiale de l'organe de mélange (12).

8. - Procédé selon l'une des revendications 1 à 7, **caractérisé en ce qu'**au moins l'un des composants (A, B) de haute viscosité de la colle est prélevé d'un récipient de stockage (21) au moyen d'une pompe aspirante à pistons (20) et est acheminé au moyen d'une conduite (22) vers une pompe de dosage (19) qui achemine au moins l'un des composants (A ou B) de la colle, par une conduite de dosage (23), selon un débit volumique constant vers la tête de mélange (10) par la soupape d'injection haute pression (14) correspondante.

9. - Procédé selon l'une des revendications 1 à 8, **caractérisé en ce que** les composants (A, B) de la colle sont mélangés selon des rapports de mélange de 200 :1 à 1 :200 et que les deux composants (A, B) de la colle, sont acheminés avec un débit volumique constant depuis le début de leur injection dans la tête de mélange vers la soupape d'injection haute pression (14) correspondante de la tête de mélange (10), jusqu'à la fin du dosage.

10. - Procédé selon la revendication 8 ou 9, **caractérisé en ce que** la pompe aspirante à pistons (20), la conduite d'acheminement (22), la pompe de dosage (19, et/ou la conduite de dosage (23) peuvent être chauffées.

11. **-** Procédé selon l'une des revendications 1 à 9, **caractérisé en ce que** la vitesse de rotation de l'organe de mélange (12) est réglable.

12. - Procédé selon l'une des revendication 1 à 11, **caractérisé en ce que** la tête de mélange (10) est déplaçable au moyen d'un robot (27), de préférence un robot à bras articulés.

13. - Dispositif pour mélanger et doser de la colle, pour de la colle à plusieurs composants, utilisable dans l'industrie automobile, par exemple pour le collage des joints de bords relevés dans la construction des carrosseries brutes, avec une tête de mélange dynamique (10) avec un organe de mélange (12) pouvant être entraîné en rotation et avec des soupapes d'injection haute pression (14) pour les composants (A, B) de la colle ainsi que des raccords de nettoyage pour le rinçage par un liquide sous haute pression, avec une pompe d'aspiration à pistons (20A, 20B) pour chaque composant (A ou B) de la colle, qui prélève le composant correspondant de son récipient de stockage (21A, 21B) et avec une pompe de dosage (19A, 19B) pour chaque composant (A, B) de la colle, qui achemine chaque composant (A ou B) de la colle au moyen de la pompe aspirante à pistons (20A, 20B) par une conduite d'acheminement (22A, 22B) pendant l'opération de mélange et de dosage, avec un débit volumique constant par une conduite de dosage (23A, 23B) vers la soupape d'injection haute pression (14) correspondante et avec un agencement de robot (27), pour le déplacement d'au moins la tête de mélange (10) par rapport à une pièce destinée à être pourvue d'un cordon de colle à plusieurs composants.

14. - Dispositif selon la revendication 13, **caractérisé par** une pompe à eau haute pression (25) qui est raccordée au moyen d'une conduite de rinçage haute pression (26) aux raccords de rinçage.
